Europäisches Patentamt

European Patent Office

Office européen des brevets

(19)

(11) Numéro de publication: **0 064 897**
**B1**

(12)

# FASCICULE DE BREVET EUROPEEN

(45) Date de publication du fascicule du brevet:
**10.07.85**

(51) Int. Cl.⁴: **G 11 B 23/42**, G 11 B 19/28

(21) Numéro de dépôt: **82400692.8**

(22) Date de dépôt: **16.04.82**

(54) Disque support d'information à codage angulaire, et système d'entraînement en rotation d'un tel disque.

(30) Priorité: **27.04.81 FR 8108333**

(43) Date de publication de la demande:
**17.11.82 Bulletin 82/46**

(45) Mention de la délivrance du brevet:
**10.07.85 Bulletin 85/28**

(84) Etats contractants désignés:
**DE GB IT NL SE**

(56) Documents cités:
**EP - A - 0 007 200**
**DE - A - 2 102 876**
**DE - A - 2 521 821**
**FR - A - 2 217 771**
**FR - A - 2 312 091**
**GB - A - 2 062 905**
**US - A - 4 079 942**

(73) Titulaire: **THOMSON-CSF, 173, Boulevard Haussmann,
F-75379 Paris Cedex 08 (FR)**

(72) Inventeur: **Bricot, Claude, THOMSON-CSF SCPI 173, bld
Haussmann, F-75379 Paris Cedex 08 (FR)**
Inventeur: **Berthet, Pierre, THOMSON-CSF SCPI 173, bld
Haussmann, F-75379 Paris Cedex 08 (FR)**
Inventeur: **Mertz, Bruno, THOMSON-CSF SCPI 173, bld
Haussmann, F-75379 Paris Cedex 08 (FR)**
Inventeur: **Gerard, Jean-Louis, THOMSON-CSF
SCPI 173, bld Haussmann, F-75379 Paris Cedex 08 (FR)**

(74) Mandataire: **Weinmiller, Jürgen et al, Zeppelinstrasse 63,
D-8000 München 80 (DE)**

BUNDESDRUCKEREI BERLIN

## Description

La présente invention se rapporte aux systèmes d'intraînement en rotation d'un disque support d'information. Elle concerne plus particulièrement les systèmes d'entraînement dans lesquels la vitesse de rotation d'un système est commandée par une boucle d'asservissement comportant un détecteur optique du mouvement de rotation de la broche porte-disque. L'entraînement de cette broche porte-disque peut être assuré par un moteur à courant continu.

La rotation de la broche se détecte optiquement en montant sur cette boucle une roue minie d'une denture à pas réguliers; cette denture est placée sur le trajet d'un dispositif photo-détecteur recueille le faisceau modulé par la denture. L'inconvénient inhérent à l'utilisation d'une roue codeuse résulte des défauts de montage sur la broche; ces défauts entraînant une excentricité de la roue par rapport à la broche à laquelle peut s'ajouter une autre excentricité due au centrage imparfait du disque support d'information à l'extrémité opposée de cette broche. Au cours du processus d'obtention d'un disque prégravé, on sait qu'un axe de pistes a été prédefini, mais l'axe mécanique du disque résultant de son utilisation ultérieure ne lui est pas confondu. Il est courant d'observer un écart entre les 2 axes de l'ordre de 100 microns ce que entraîne une variation de vitesse linéaire importante au cours de la rotation du disque. Lorsque la boucle d'asservissement ajuste la vitesse angulaire de rotation de la broche, une piste portée par le support d'information peut être explorée avec une vitesse que fluctue. D'où la difficulté de transcrire sur cette piste un signal isochrone. Il est également connu du document US-A-4 079 942, un procédé de contrôle de vitesse d'une tabler de lecture phonographique que consiste à lire sous le plateau porte disque des marques radiales au moyen d'un système optique à réflexion qui évalue le temps de passage d'une marque ou le temps écoulé entre deux passages de marques successives.

En vue de pallier à ces inconvénients la présente invention a pour objet un disque support d'information ayant un orifice de centrage et au moins une face prégravée dans laquelle sont agencés des éléments de prégravure disposes selon un ensemble de spires présentant un centre géométrique commun; l'exploration sélective de ladite face par suivi séparé desdites spires comportant la mise en rotation dudit disque avec positionnement dudit orifice sur une broche rotative et le contrôle de la vitesse d'exploration par un moyen chronométrique que détecte optiquement à l'aide d'un jeu circulaire de marques le mouvement rotatif assurant ladite exploration, au moins une partie desdites marques étant superposables à leurs voisines par des rotations d'un nième de tour du support desdites marques, caractérisé en ce que le support desdites marques est ladite face prégravée; ledites marques étant constituées par des éléments de prégravure matérialisant un groupe de spires dudit ensemble que forme autour dudit orifice une couronne subdivisée en secteurs angulaires égaux dont les lignes radiales de démarcation passent par ledit centre géométrique; chacun desdites secteurs comprenant l'une desdites marques alternant avec une plage vierge d'éléments de prégravure.

Ce disque à lecture optique peut être souple ou rigide, transparent ou réfléchissant et les éléments diffractants enregistrés en modulation d'amplitude ou de phase.

L'invention sera mieux comprise au moyen de la description ci-après et des figures annexées parmi lesquelles:

—la figure 1 est une vue de dessus d'un disque support d'information avec sa couronne prégravée selon l'invention;

—la figure 2 montre l'influence des différentes parties composant la couronne sur un faisceau lumineux incident;

—la figure 3 montre l'allure du signal électrique délivré par le récepteur après passage d'une partie de la couronne devant le faisceau lumineux;

—la figure 4 est un schéma synoptique du dispositif électronique d'asservissement de la vitesse d'exploration d'une piste contenant l'information;

—la figure 5 est une vue partielle du disque avec sa couronne présentant un exemple de réalisation d'indexage;

—la figure 6 montre l'allure du signal électrique délivré par le récepteur après passage du faisceau lumineux sur la zone d'indexage;

—la figure 7 montre un exemple de circuit de détection de l'indexage;

—la figure 8 donne l'allure en fonction du temps des signaux an différentes points du circuit de détection de l'indexage;

—la figure 9 est une vue partielle du support présentant une portion de pistes wobbulées et une portion de la couronne circulaire.

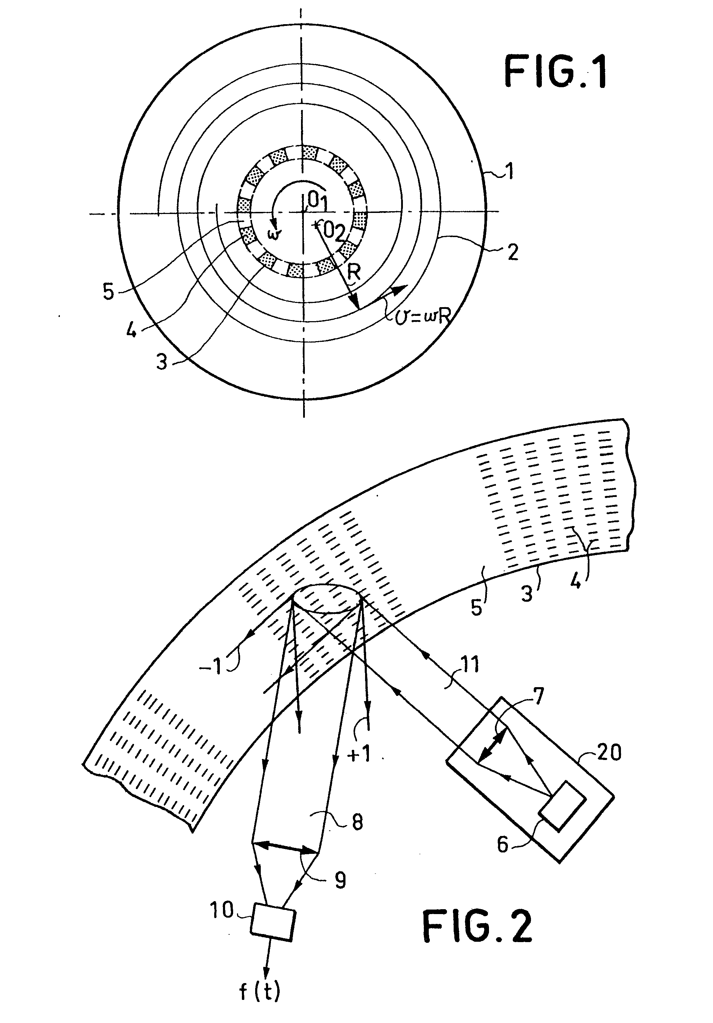

Sur la figure 1, à titre d'exemple non limitatif, on a représenté un support d'information 1, souple ou rigide, en forme de disque. Sur ce disque on a prégravé dans une plage annulaire une spirale 2 représentée en partie et centrée sur $O_1$. Cette spirale est destinée à recevoir l'information sous forme d'éléments diffractants de petites dimensions. Un point élémentaire d'information a une dimension de la longueur d'onde utilisée pour l'enregistrement ou la lecture. Les dernières pistes de la spirale 2 (quelques centaines de pistes) on été réservées à la fabrication d'une couronne circulaire de ces marques ne pose pas de problèmes particuliers. Les marques sont composées d'éléments diffractants gravés sur les pistes. A titre d'exemple ces éléments diffractants peuvent être gravés pendant la durée des marques à partir d'une fréquence de 3 MHz de façon à réaliser physiquement une succession de points identiques le long d'une por-

tion de piste. La vitesse de gravure est dans cet exemple de 750 t/mn et la fréquence d'inscription des marques de 14 KHz, la couronne a un diamètre moyen de 78 mm pour une largeur de 0,4 mm. Cette couronne circulaire se présente comme une alternance de marques 4 et de plages vierges 5 délimitant des secteurs angulaires identiques. La couronne circulaire et la piste prégravée destinée à recevoir l'information possèdent ainsi le même centre. Pendant l'utilisation ultérieure du disque, le centre de rotation ne sera plus $O_1$ mais $O_2$ situé sur l'axe de la broche d'entraînement du disque.

La figure 2 montre le comportement d'un faisceau lumineux incident à la couronne circulaire du disque en rotation. Cette figure est une représentation très agrandie d'une portion de la couronne circulaire 3, formée de marques 4 et de plages vierges d'éléments diffractants 5.

Une source de lumière 6 éclaire une partie de la couronne au moyen d'un condenseur 7. Lors du passage d'une plage vierge 5 le faisceau lumineux émergeant 8 est focalisé par la lentille 9 vers le récepteur 10 que délivre un signal électrique fonction de l'éclairement qu'il reçoit. Lors du passage d'une marque 4 le faisceau lumineux émergeant occupe un angle solide plus important en raison de l'apparition de composantes diffractées d'ordre $-1$ et $+1$ et le récepteur 10 ne reçoit plus qu'une partie de l'énergie contenue dans le faisceau émergeant.

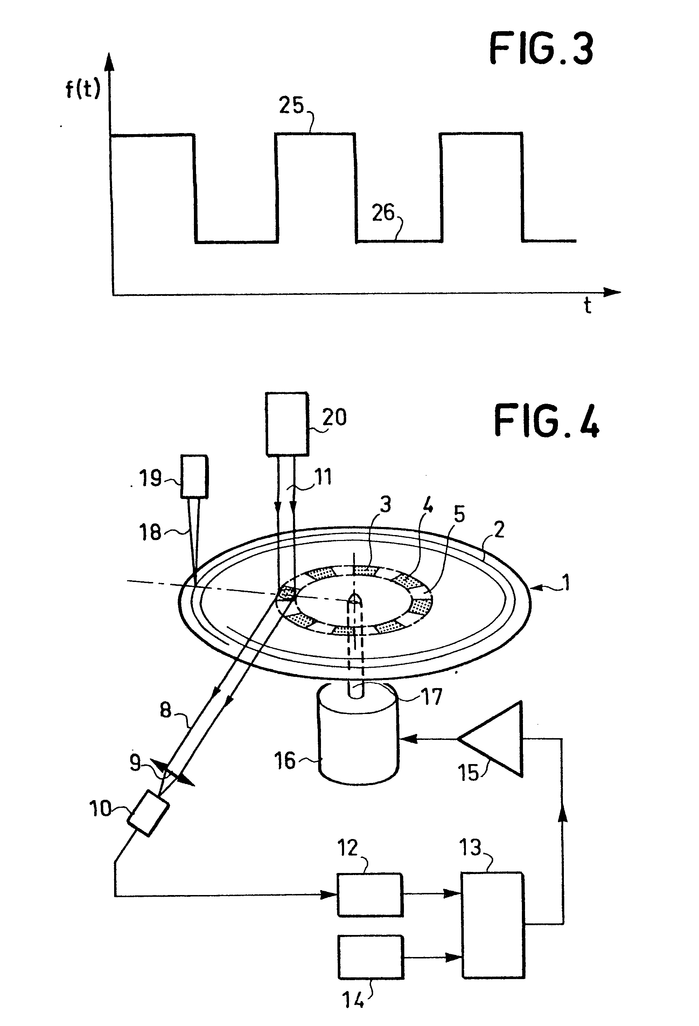

La figure 3 montre l'allure du signal électrique délivré par le récepteur 10 lors de l'exploration de la couronne 3 par le faisceau lumineux 11. Ce signal électrique est une fonction du temps et a une allure en créneux. Les maxima 25 correspondent au passage d'une plage vierge 5 devant le faisceau lumineux 11, les minima 26 au passage d'une marque 4. Chaque marque ou plage vierge délimitant un secteur angulaire géométriquement identique aux autres marques ou plages vierges de la couronne, le faisceau lumineux 11 verra défiler les marques en un temps plus ou moins long selon l'excentrement des marques ou des plages vierges considérées. Le signal délivré par l'élément récepteur 10 est donc formé de créneaux de largeurs différentes, ou autrement dit ce signal f(t) est un signal rectangulaire modulé en fonction de l'excentrement.

A partir des signaux disponibles et avec des techniques connues il est aisé d'appliquer au moteur d'entraînement du support un signal que corrigera sa vitesse de rotation afin d'asservir la vitesse angulaire du support. Une condition impérative pour un fonctionnement correct du système est que les taches formées sur le support par le faisceau éclairant la couronne et par le faisceau lecteur/enregistreur de l'information soient situées sur un même rayon du support afin de corriger effectivement la vitesse angulaire de la zone considérée. Dans une première réalisation de l'invention, le faisceau lumineux éclaire la couronne selon une tache circulaire d'environ 100 microns de diamètre. Avec les dimensions de la couronne données précédemment, la tache se trouve toujours comprise à l'intérieur de la couronne puisque l'écart maximal entre les axes mécanique et de rotation du disque n'excède pas 100 microns. La forme de la tache n'est pas critique pour le fonctionnement selon l'invention mais on pourrait concevoir une tache allongée dans la direction d'un rayon du disque afin de diminuer les temps de montée et de descente du signal perçu par le récepteur.

L'asservissement de la vitesse de rotation du support se fait par rapport à une fréquence pilote. Un exemple de réalisation est donné par le schéma synoptique de la figure 4. Sur cette figure on a aussi représenté une partie de la spirale 2 prégrave sur le disque 1 ainsi que le faisceau de lecture ou d'enregistrement 18 délivré par un système optique 19 non détaille, le faisceau incident 11 délivré par le système optique 20 détaillé dans la figure 2, le faisceau émergeant 8, la lentille 9 et le photo-récepteur 10. Le faisceau lumineux 8 émergant de la couronne 3 est capté par un photo-récepteur 10, lequel délivre un signal rectangulaire et modulé en fréquence f(t) par l'excentricité du disque à un circuit de mise en forme 12. Un discriminateur de fréquence (ou de phase) 13 compare le signal issu du circuit de mise en forme 12 à un signal de référence délivré par un oscillateur local 14 que peut être constitué par un oscillateur à quartz suivi d'un diviseur de fréquence par exemple. Le signal de sortie de ce discriminateur est appliqué par l'intermédiaire d'un amplificateur 15 au moteur à courant continu 16 qui entraîne en rotation par l'intermédiaire de la broche 17 le disque support d'information 1.

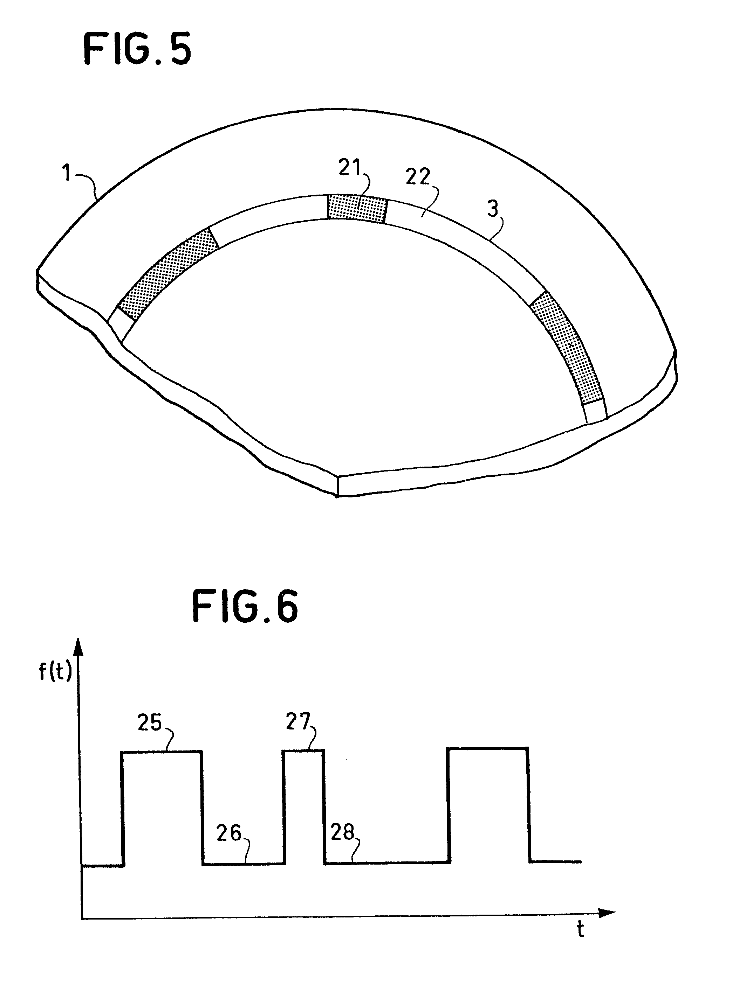

Il est également du domaine de l'invention de disposer d'un repère sur ladite couronne prégravée, afin de repérer l'index zéro. Ceci permet une utilisation plus commode du support d'information. En effet avec un tel repère on peut diposer d'une référende angulaire utile pour localiser l'information secteur par secteur dans la plage annulaire où cette information est ou doit être stockée. Un mode de réalisation de l'indexage consiste à doubler la fréquence d'une marque sur une période spatiale de la couronne. La figure 5 représente une vue partielle du disque avec sa couronne 3 présentant un exemple de réalisation par doublement de la fréquence spatiale d'une marque. Sur l'emplacement réservé à une marque on a donc réalisé une marque 21 occupant un quart de période ordinaire et une plage vierge 22 occupant trois quarts de periode ordinaire. Ce doublement très bref de la fréquence n'a que très peu d'influence sur le signal global f(t) envoyé au discriminateur 13.

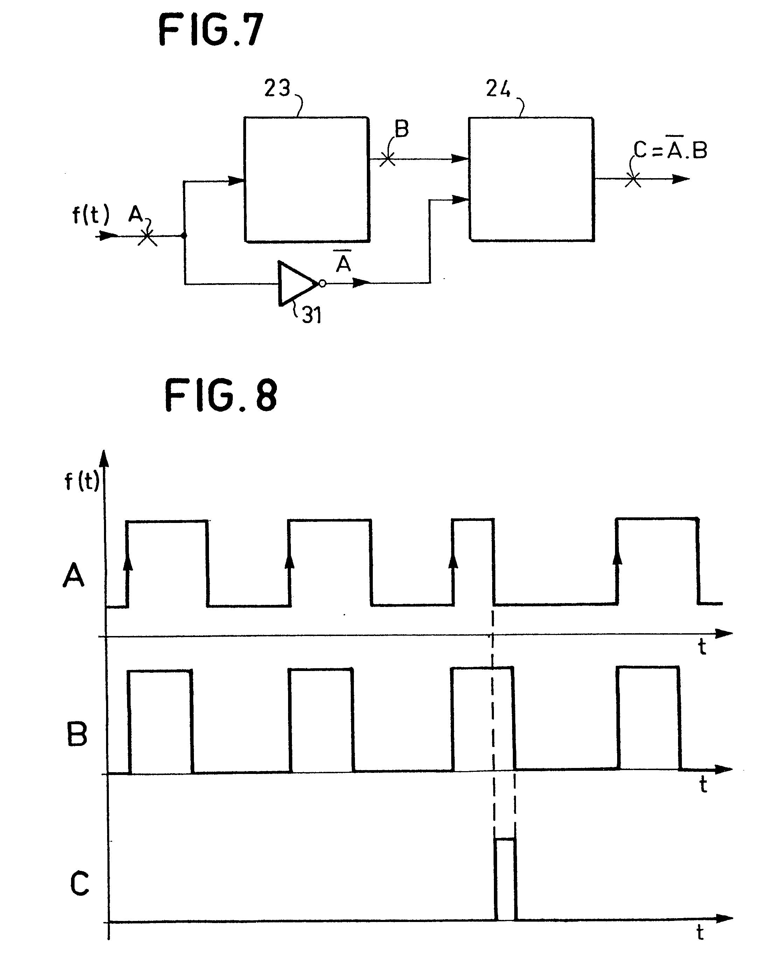

La figure 6 montre l'allure du signal électrique délivré par le récepteur 10 après le passage du faisceau lumineux 11 sur la zone d'indexage. On voit sur cette figure qu'au passage devant la zone d'indexage la fréquence du signal f(t), formé de creneaux présentant des maxima 25 et des minima 26, a été doublée pour donner un maximum 27, puis un minimum 28. Un système identificateur et séparateur à bascule monostable permet de détecter l'indexage. La figure 7 montre un exemple de réalisation. Une partie du signal issu du récepteur 10 est appliquée à l'entrée d'un monostable 23 qui bascule sur les fronts montants des créneaux que lui sont appliqués. La durée des impulsions délivrées par le circuit monostable 23 est inférieure à toute demi-période ordinaire du signal f(t) mais est supérieure à la durée de l'impulsion due à la présence sur la couronne du repère d'indexage. Une porte ET 24 reçoit sur une première entrée le signal de sortie du monostable et sur une seconde entrée le complément du signal f(t) délivré par un circuit 31 assurant une fonction PAS. La figure 8 donne l'allure en fonction du temps des signaux en différents points du circuit représenté à la figure 7. Au point C le signal recueilli ne présente qu'une seule impulsion par tour du disque. Cette unique impulsion permet un repérage angulaire du disque support d'information.

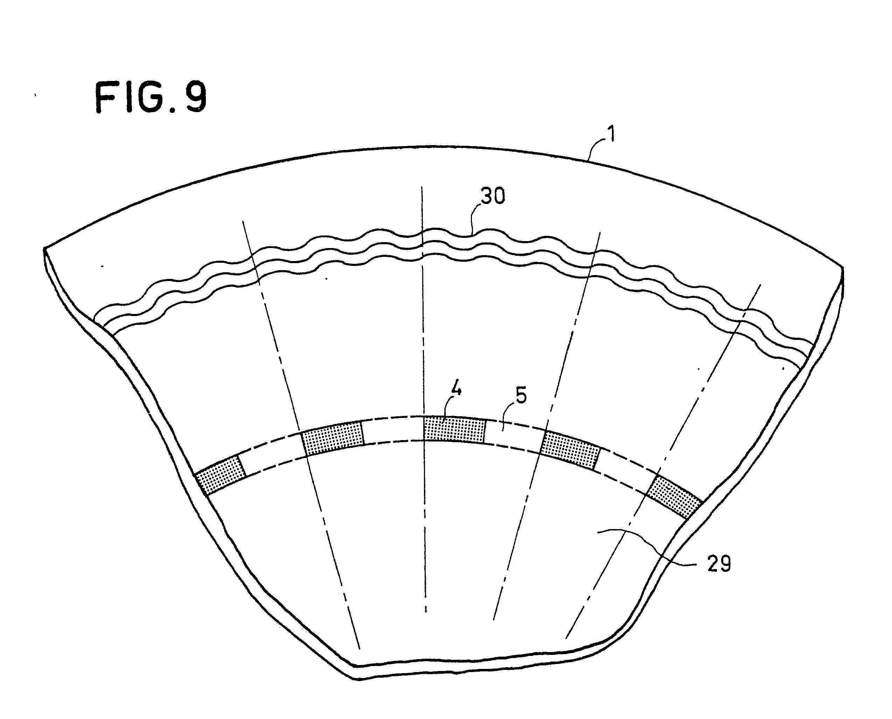

Un développement intéressant de l'invention est la possibilité de connaître la fréquence de référence nécessaire à la détection synchrone d'une piste prégravée et wobbulée. En effet lors de la gravure de la matrice il est facile de graver les pistes et la couronne de telle façon que la fréquence d'inscription des marques et la fréquence de wobbulation soient dans un rapport entier. Par exemple la fréquence de la wobbulation peut être triple de la fréquence d'inscription des marques. La lecture de la couronne donne un signal à une certaine fréquence que l'on peut tripler, pour rester dans l'exemple cité, afin d'obtenir un signal de référence nécessaire au suivi de la piste wobbulée. La figure 9 représente une vue partielle d'un support suivant l'invention. Elle montre qu'un secteur angulaire 29 défini par une marque 4 et une plage vierge 5 comprend un nombre entier l'alternances spatiales (3 dans le cas considéré ici) que définissent une portion de piste prégravée et wobbulée 30.

L'invention permet donc d'obtenir un codeur sur chaque support, facilement réalisable à partir d'une copie globale de la matrice. L'operation toujours délicate de centrage d'une zone codeuse sur l'axe de rotation du support est supprimée. Les conséquences sur l'isochronisme de lecture des défauts d'excentrement sont corrigés même pour un un excentrement important (de 50 à 100 microns). La conception d'un repérage angulaire par indexage ne pose pas de problèmes et il est aisé à partir de la fréquence extraite de la couronne de retrouver une fréquence représentative de la piste wobbulée.

**Revendication**

1. Disque support d'information (1) ayant un orifice de centrage et au moins une face prégravée dans laquelle sont agencés des éléments de prégravure disposés selon un ensemble de spires (2) présentant un centre géométrique commun (O₁) l'exploration sélective de ladite face par suivi séparé desdites spires comportant la mise en rotation dudit disque avec positionnement dudit orifice sur une broche rotative (17) et le contrôle de la vitesse d'exploration par un moyen chronométrique que détecte optiquement à l'aide d'un jeu circulaire de marques (4) le mouvement rotatif assurant ladite exploration, au moins une partie desdites marques (4) étant superposables à leurs voisines par des rotations d'un nième de tour du support desdites marques, caractérisé en ce que le support desdites marques (4) est ladite face prégravée; lesdites marques (4) étant constituées par des éléments de prégravure matérialisant un groupe de spires dudit ensemble (2) que forme autour dudit orifice une couronne (3) subdivisée en secteurs angulaires égaux (29) dont les lignes radiales de démarcation passent par ledit centre géométrique (O₂); chacun desdits secteurs (29) comprenant l'une desdites marques (4) alternant avec une plage (5) vierge d'éléments de prégravure.

2. Disque selon la revendication 1, caractérisé en ce que le stockage des données représentatives de ladite information a lieu dans une plage annulaire entourant ladite couronne (3).

3. Disque selon l'une quelconque des revendications 1 et 2, caractérisé en ce que l'un desdits secteurs angulaires égaux (29) comporte une plage vierge (22) d'étendue supérieure à celle des plages vierges (5) situées dans les autres secteurs angulaires égaux (29).

4. Disque selon l'une quelconque des revendications 1 à 3, caractérisé en ce que dans l'éléments de gravure alignés selon les spires (2) dudit groupe.

5. Disque selon la revendication 2, caractérisé en ce que dans ladite plage annulaire, lesdits éléments de prégravure sont agencés pour matérialiser des pistes wobbulées (30) avec une fréquence spatiale d'excursion radiale multiple de la fréquence spatiale d'inscription desdites marques (4) le long de ladite couronne (3).

6. Système d'entrainement en rotation d'un disque selon l'une quelconque des revendications 1 à 5, comprenant un moteur (16) entrainant ladite broche rotative (17) placé sous la commande desdits moyens chronométriques, lesquels comprennent des moyens optiques d'éclairage (20) desdites marques (4) et des moyens photodétecteurs (10) recueillant le rayonnement (8) que a interagi avec lesdites marques (4), caractérisé en ce que la tache lumineuse fixe produite dans ladite couronne (3) par ledits moyens optiques d'éclairage (20) et l'impact mobile du faisceau (18) destiné à inscrire ou à lire l'information portée par le disque (1) sont situés sensiblement sur un même rayon dudit disque (1).

7. Système selon la revendication 6, caractérisé en ce que lesdits moyens photodétecteurs (10) comprennent des moyens de filtrage spatial (9) des ordres de diffraction supérieurs du rayonnement diffracté par les éléments de prégravure contenus dans lesdites marques (4).

8. Système selon l'une quelconque des revendications 6 et 7, caractérisé en ce que les moyens photodétecteurs comprennent des moyens électriques (23, 24, 31) permettant de déceler la présence d'un repère d'indexage (21, 22) occupant un secteur prédeterminé de ladite couronne (3).

9. Système selon l'une quelconque des revendications 6 à 8, caractérisé en ce que le signal de lecture délivré par lesdits moyens photodétecteurs (10) est multiplié en fréquence, afin de fournir un signal de référence; ledit système comprenant en outre un détecteur synchrone recevant ledit signal de référence en même temps qu'un signal de lecture de piste prégravé et wobbulée, afin de founir un signal de suivi de ladite piste prégravée par le faisceau de lecture dudit disque.

## Patentansprüche

1. Informationsträgerplatte (1) mit einer Zentrieröffnung und wenigstens einer vorgravierten Fläche, in welcher vorgravierte Elemente als eine Menge von Windungen (2) angeordnet sind, die ein gemeinsames geometrisches Zentrum $(O_1)$ aufweisen, wobei die selektive Exploration der genannten Fläche durch getrennte Verfolgung der genannten Windungen umfaßt, daß die genannte Platte in Drehung versetzt wird, während die genannte Öffnung auf einen rotierenden Dorn (17) aufgesetzt ist, und die Explorationsgeschwindigkeit durch Chronometermittel gesteuert wird, welche die Drehbewegung zur Exploration optisch mittels eines Satzes von Kreismarkierungen (4) erfassen, wobei wenigstens ein Teil der Markierungen, (4) mit den ihnen benachbarten überlagerbar sind durch Drehungen um ein ntel Umdrehung des Trägers der Markierungen, dadurch gekennzeichnet, daß der Träger der genannte Markierungen (4) die genannten vorgravierte Fläche ist; wobei diese Markierungen (4) aus vorgravierten Elementen gebildet sind, die eine Gruppe von Windungen der genannten Menge (2) materialisieren, welche um die genannte Öffnung herum einen Kranz (3) bildet, der in gleiche Winkelsektoren (29) unterteilt ist, deren radiale Begrenzungslinien durch das genannte geometrische Zentrum $(O_2)$ verlaufen; wobei jeder der genannten Sektoren (29) eine der genannten Markierungen (4) umfaßt, welche mit einem von vorgravierten Elementen freien Bereich (5) abwechseln.

2. Platte nach Anspruch 1, dadurch gekennzeichnet, daß die Speicherung der Daten, welche die genannten Information darstellen, in einem Ringbereich erfolgt, welcher einer anderen Gruppe von Windungen der genannten Menge (2) entspricht; wobei dieser Ringbereich den genannten Kranz (3) umgibt.

3. Platte nach einem der Ansprüche 1 und 2, dadurch gekennzeichnet, daß einer der gleichen Winkelsektoren (29) einen freien Bereich (2) umfaßt, dessen Erstreckung größer ist als der der freien Bereiche (5), welche in den anderen gleichen Winkelsektoren (29) liegen.

4. Platte nach einem der Ansprüche 1 bis 3, dadurch gekennzeichnet, daß innerhalb der Erstreckung der genannten Markierungen (4) gravierte Elemente in ausgerichteter Aufeinanderfolge entsprechend den Windungen (2) der Gruppe vorgesehen sind.

5. Platte nach Anspruch 2, dadurch gekennzeichnet, daß innerhalb des genannten Ringbereiches die genannten vorgravierten Elemente so angeordnet sind, daß sie Spuren (30) materialisieren, welche mit einer räumlichen Frequenz gewobbelt sind, deren radialer Hub ein Vielfaches der räumlichen Aufzeichnungsfrequenz der genannten Markierung (4) entlang dem genannten Kranz (3) beträgt.

6. Drehantriebssystem für eine Platte nach einem der Ansprüche 1 bis 5, mit einem Motor (16), welcher den genannten rotierenden Dorn (17) antreibt und der Steuerung durch die genannten Chronometermittel unterliegt, welche optische Beleuchtungsmittel (20) zur Beleuchtung der genannten Markierungen (4) und Photodetektormittel (10) umfassen, welche die Strahlung (8) nach Wechselwirkung mit den genannten Markierungen (4) aufnehmen, dadurch gekennzeichnet, daß der feste Lichtfleck, der in dem genannten Kranz (3) durch die genannten optischen Beleuchtungsmittel (20) erzeugt wird, und der bewegliche Auftreffpunkt des Bündels (18) zum Aufzeichnen oder Auslesen der Information auf der Platte (1) im wesentlichen auf demselben Radius der Platte (1) liegen.

7. System nach Anspruch 6, dadurch gekennzeichnet, daß die genannten Photodetektormittel (10) Mittel (9) zur räumlichen Filterung der höheren Beugungsordnungen der Strahlung umfassen, welche von den vorgravierten Elementen gebeugt wird, die in den genannten Markierungen (4) enthalten sind.

8. System nach einem der Ansprüche 6 und 7, dadurch gekennzeichnet, daß die Photodetektormittel elektrische Mittel (23, 24, 31) umfassen, die es ermöglichen, die Anwesenheit einer Indexmarke (21, 22) zu erkennen, die einen vorbestimmten Sektor des genannten Kranzes (3) einnimmt.

9. System nach einem der Ansprüche 6 bis 8, dadurch gekennzeichnet, daß das Lesesignal, welches von den genannten Photodetektormitteln (10) abgegeben wird, in seiner Frequenz multipliziert wird, um ein Referenzsignal zu liefern; wobei dieses System ferner einen Synchrondetektor umfaßt, welcher das genannte Referenzsignal gleichzeitig mit einem gewobbelten Lesesignal einer vorgravierten Spur empfängt, um ein Signal der Spurverfolgung der vorgravierten Spur durch das Bündel zum Auslesen der genannten Platte zu liefern.

## Claims

1. Information carrier disc (1) having a centering opening and at least one preengraved face wherein preengraved elements are arranged according to a set of windings (2) having a common

geometric center ($O_1$), the selective exploration of said face by separate tracing of said windings comprising the rotating of said disc with said opening being positioned on a rotary mandrel (17) and the control of the exploration speed by chronometer means optically detecting by means of a set of circular marks (4) the rotary movement ensuring said exploration, at least some of said marks (4) being adapted to be superimposed upon their neighbors by rotations of an nth turn of the carrier of said marks, characterized in that the carrier of said marks (4) is said preengraved face; said marks (4) being formed of preengraved elements materializing a group of windings of said set (2) forming about said opening a ring (3) subdivided into equal angular sectors (29) the radial definition lines of which pass through said geometric enter ($O_2$); each of said sectors (29) comprising one of said marks (4) alternating with a land (5) which is free of preengraved elements.

2. Disc according to claim 1, characterized in that the storing of the data representative of said information is performed within an annular zone corresponding to another group of windings of said set (2); said annular zone surrounding ring (3).

3. Disc according to any of claims 1 and 2, characterized in that one of said equal angular sectors (29) comprises a bare zone (22) having an extent exceeding that of the bare lands (5) located within the other angular equal sectors (29).

4. Disc according to any of claims 1 to 3, characterized in that sequences of engraved elements aligned in accordance with the winding (2) of said group are provided within the extent of said marks (4).

5. Disc according to claim 2, characterized in that, within said annular zone, said preengraved elements are arranged in a manner to materialize tracks (30) wobbled with a spatial frequency of a radial excursion which is a multiple of the spatial frequency of the inscription of said marks (4) along said ring (3).

6. Rotary drive system of a disc according to any of claims 1 to 5, comprising a motor (16) driving said rotary mandrel (17) placed under the control of said chronometer means which comprise optical means (20) for the illumination of said marks (4) and photodetector means (10) receiving said radiation (8) having interacted with said marks (4), characterized in that the fixed light spot produced within said ring (3) by said optical illumination means (20) and the movable impact of the beam (18) for writing or reading the infomation carried by said disc (1) are substantially located on the same radius of said disc (1).

7. System according to claim 6, characterized in that said photodetector means (10) comprise means (9) for the spatial filtering of the higher diffraction orders of the radiation diffracted by the preengraved elements contained within said marks (4).

8. System according to any of claims 6 and 7, characterized in that the photodetector means comprise electric means (23, 24, 31) permitting to identify the presence of an indexing marking (21, 22) occupying a predetermined sector of said ring (3).

9. System according to any of claims 6 to 8, characterized in that the reading signal supplied by said photodetector means (10) is frequency multiplied in order to supply a reference signal; said system further comprising a synchronous detector receiving said reference signal simultaneously with a wobbled reading signal of the preengraved track in order to supply a signal of the preengraved track tracing by said disc reading beam.

0 064 897

FIG.1

FIG.2

f(t)

# FIG.3

# FIG.4

# FIG.5

# FIG.6

# FIG.7

# FIG.8

0 064 897

FIG. 9